# EUROPÄISCHE PATENTANMELDUNG

(11) **EP 1 666 132 A1**
(43) Veröffentlichungstag der Anmeldung: **07.06.2006**
(21) Anmeldenummer: 04003471.2
(22) Anmeldetag: 17.02.2004
(51) Int. Cl.: B01F 5/00, B01F 15/00, B01F 13/00, F16K 15/02

(54) **Mikromischer**

(71) Anmelder: Ehrfeld Mikrotechnik BTS GmbH, 55234 Wendelsheim (DE)
(72) Erfinder: Ehrfeld, Wolfgang, Prof.Dr., 55124 Mainz (DE); Merkel, Till, Dr., 65187 Wiesbaden (DE)
(74) Vertreter: Siegers, Britta

(57) **Zusammenfassung**

Die Erfindung betrifft einen Mikromischer zum Vermischen von mindestens zwei unter Bildung von Ausfällungen oder Suspensionen reagierenden Fluiden mit einem ersten Kanal für die Zufuhr eines ersten Teilstroms (6) und mit einem zweiten Kanal für die Zufuhr eines zweiten Teilstroms (7), die in flachen Eintrittsspalten (19, 20) in eine Misch- und Reaktionszone (10) münden und die Misch- und Reaktionszone (10) über einen Auslasskanal (11) verlassen, dadurch gekennzeichnet, dass zwischen der Misch- und Reaktionszone (10) und mindestens einem Kanal für die Zufuhr eines Teilstroms (6, 7, 37) eine Rückströmsperre angeordnet ist.

## Beschreibung

Die Erfindung betrifft einen Mikromischer zum Vermischen von mindestens zwei unter Bildung von Ausfällungen oder Suspensionen reagierenden Fluiden.

Durch den Einsatz mikrostrukturierter Bauteile in Apparaten zur Vermischung von Fluiden werden Vorteile bei der Produktqualität erzielt sowie Mischzeiten und Größe der erforderlichen Apparaturen im Vergleich zu herkömmlichen Aufbauten verringert. Ein wesentliches Merkmal mikrostrukturierter Bauteile sind die kleinen Abmessungen der Fluidkanäle, die typischerweise im Bereich zwischen 10 und 5.000 µm angesiedelt sind. Aus diesem Grund können beispielsweise mit Multilaminationsmischern feine Fluidlamellen erzeugt werden, zwischen denen aufgrund ihrer geringen Dicke ein schneller Stoffaustausch durch Diffusion erfolgen kann. Die kleinen Abmessungen der durchströmten Querschnitte verlangen allerdings auch besondere Maßnahmen, um sie im Betrieb gegen Ablagerungen und Verstopfungen zu schützen. So werden beispielsweise im Zulauf derartiger Bauteile Partikelfilter eingesetzt, wobei sich die Auswahl der Trenngrenze an den Abmessungen der Mikrostruktur orientiert.

Außer durch Partikel, die über die Zulaufkanäle für die einströmenden Medien in einen Mikromischer gelangen können, besteht auch aufgrund von chemischphysikalischen Prozessen, die in den Bauteilen etwa nach einer Vermischung ablaufen, die Gefahr von Ablagerungen und Verstopfungen. So können feste Produkte zum Beispiel durch Fällung in Folge einer Neutralisationsreaktion, durch Überschreiten des Löslichkeitsprodukts oder durch Kristallisation des Reaktionsprodukts bei einer Umsetzung organischer oder anorganischer Verbindungen gebildet werden. Aus der DE 101 48 615 A1 ist ein Verfahren zur Durchführung chemischer Prozesse bekannt, bei denen mindestens zwei unter Ausbildung von Niederschlägen oder Suspensionen reagierende Fluide in einem Fluidkanäle aufweisenden Mikromischer zusammengeführt werden. Um Verstopfungen des Mikromischers zu verhindern, werden die mindestens zwei Fluide durch ein weiteres Trennfluid voneinander getrennt in eine Mischkammer oder eine Reaktionsstrecke eingeleitet. Eine vorzeitige Reaktion der Fluide wird dadurch vermieden und in einen unkritischen Bereich einer Mischervorrichtung verlagert. Eine weitere Möglichkeit, den Ablagerungen und Verstopfungen in den Mikrostrukturen vorzubeugen, wird in der DE 202 18 972 U1 beschrieben. Dort werden die Bauteile eines statischen Laminationsmikrovermischers so konstruiert, dass sie leicht zugänglich und leicht zu reinigen sind. Auf sehr einfache Weise können Suspensionen in mikrostrukturierten Bauteilen dann unter Ausschluss von Verstopfungen noch gehandhabt werden, wenn die Abmessungen der Mikrostrukturen deutlich größer sind als die auftretenden maximalen Partikelabmessungen. In der DE 100 31 558 A1 wird daher im Zusammenhang mit Verfahren zur Konditionierung organische Pigmente empfohlen, die mikrostrukturierten Bereiche innerhalb eines Reaktors so zu dimensionieren, dass die kleinste lichte Weite der Mikrostrukturen vorteilhafter Weise ungefähr zehnmal größer als der Durchmesser der größten Teilchen ist. Dadurch vergrößern sich jedoch auch die charakteristischen Abmessungen der Bauteile, und man spricht häufig nicht mehr von Mikro-, sondern von Minireaktoren. Auch wenn durch diese Maßnahmen Abhilfe bezüglich der Verstopfungsgefahr geschaffen wird, so verringert sich dadurch häufig auch der Nutzen, den die Mikrostrukturen für die Prozessführung und Produktqualität erbringen. Auf jeden Fall sollten zur Vermeidung von Ablagerungen in der Auslaufzone eines Mischers oder Reaktors Totvolumina und scharfe Umlenkungen in der Wandung vermieden werden. Kommt es dennoch zu Verstopfungen, so können aktive Reinigungsmaßnahmen Abhilfe schaffen. In der DE 101 43 189 A1 werden ein Verfahren und eine Vorrichtung zur prozessbegleitenden Reinigung von Mikro- und Minireaktoren beschrieben. Dabei wird der Mikro- bzw. Minireaktor durch eine kontrollierte Druckerhöhung mit anschließender plötzlicher Entspannung oder durch einen Gasdruckstoß zyklisch oder mit Hilfe einer Regelung gereinigt. So wird Wandbelag, der sich beispielsweise aus an der chemischen Synthese oder dem physikalischen Prozess beteiligten Feststoffen gebildet hat, nahezu vollständig abgetragen. Ergänzend oder alternativ zu solchen Reinigungsverfahren sind auch besondere konstruktive Maßnahmen und spezielle Arten der Prozessführung bekannt, welche die Ausbildung von Wandbelägen und die Verstopfung der mikrostrukturierten Bauteile verhindern. Wie bereits oben erwähnt, ist aus der DE 101 48 615 A1 der Einsatz eines Trennfluids bekannt. Das Trennfluid kann allerdings die Reaktion nachteilig beeinflussen, indem es zu einer Verdünnung einer einphasigen Mischung führt und die Übersättigung für die Fällungsreaktion und damit die Ausbeute der Umsetzung verringert. Außerdem muss ein solches Trennfluid anschließend vom Produktstrom abgetrennt werden. In der DE 101 19 718 A1 wird ein Aufbau zur Herstellung inhalierfähiger Arzneistoffe beschrieben, der aus einem Mikromischer, einem Segmenter und einer anschließenden Verweilstrecke besteht. Im Mikromischer werden beispielsweise zwei flüssige Komponenten vermischt, die im Segmenter in einzelne Einheiten aufgeteilt werden, wobei die einzelnen Einheiten durch eine andere Phase voneinander getrennt werden. Dieses zweiphasige System wird dann in einer Verweilstrecke aufgeheizt, um die Reaktion einzuleiten, die zur Feststoffbildung führt. Die Segmentierung der reagierenden Phase verhindert dabei die Bildung größerer Agglomerate. Des Weiteren ist es bekannt, Strömungseffekte auszunutzen, um kleine Feststoffeinheiten zu erzeugen. So wird in der EP 1 165 224 B1 beschrieben, wie mindestens zwei flüssige Medien aus Mikrodüsen in dünnem Strahl unter hohem Druck aufeinander geschossen werden. Im Kollisionspunkt werden dadurch feine Tröpfchen erzeugt, in denen dann physikalischchemische Umwandlungen ablaufen und deren Größe auch die Größe der festen Reaktionsprodukte bestimmt. Diese werden durch einen Hilfsstrom abgeführt, das kann ein Gas oder eine Flüssigkeit sein, die anschließend abgetrennt werden müssen. In der DE 198 51 253 A1 wird die Herstellung von Bisphenol A unter Verwendung einer kontrollierten Turbulenz beschrieben. Die Turbulenz wird durch eine geeignete Strömungsführung erzeugt, und mit ihr lassen sich Form und Größe der Teilchen einstellen. Die EP 0 913 187 B1 beschreibt ein Verfahren zur kontinuierlichen Polymerisation mit einem Mikromischer für Reaktionsflüssigkeiten. Zur Herstellung von Polymeren werden dort zwei oder mehr Monomere aus Düsen ausgespritzt und in einem oder mehreren Schritten zusammen geführt. Die Mischungen werden dann mittels Druck aus der Mischkammer geleitet. Der Punkt des Aufeinanderprallens zweier Strahlen von Fluiden liegt in einiger Entfernung von den Düsen, mit denen die Fluide im Winkel aufeinander gespritzt werden, so dass eine Verstopfung der Düsen ausgeschlossen werden kann. Die WO 01/62374 A2 beschreibt ein Verfahren zur Herstellung von Nanosuspensionen. Dabei treten die Fluide nach ihrer Vermischung in einer Mischkammer in eine Düse ein, die sie über einen Auslaufkanal verlassen. Die Vermischung wird durch Turbulenzen erzielt, so dass Ablagerungen und Verstopfungen der Mikrostrukturen auf diese Weise vorgebeugt wird.

Zusammenfassend ist festzustellen, dass die bisher verwendeten Lösungen gegen Ablagerungen und Verstopfungen der Mikrostrukturen in den folgenden Maßnahmen bestehen: Die Bauteile der Mikrostrukturen werden so konstruiert, dass sie gut zugänglich und leicht zu reinigen sind, auch werden sie deutlich größer als die Partikel gebaut, darüber hinaus können Verweilstrecken und zusätzliche Kanäle für Hilfsströme vorgesehen sein. Die Verfahren zur Vermeidung von Ablagerungen und Verstopfungen an Mikroreaktoren sehen eine prozessbegleitende Reinigung vor, geeignete Strömungsführungen, Vermischungen fern der Zuleitungskanäle oder Erzeugung von Turbulenzen. Allen Maßnahmen ist gemein, dass sie die Effizienz der Mikroreaktoren beeinträchtigen oder großen zusätzlichen Aufwand bedeuten.

Aufgabe der vorliegenden Erfindung ist es, einen Mikromischer zum Vermischen von mindestens zwei Fluiden zur Verfügung zu stellen, der eine schnelle und effiziente Vermischung der Fluide gewährleistet und gleichzeitig gute Beständigkeit gegenüber unerwünschten Ablagerungen und Verstopfungen in den Mikrostrukturen aufweist.

Die Aufgabe wird erfindungsgemäß gelöst durch einen Mikromischer nach dem Patentanspruch 1.

Der erfindungsgemäße Mikromischer zum Vermischen von mindestens zwei unter Bildung von Ausfällungen oder Suspensionen reagierenden Fluiden weist einen ersten Kanal für die Zufuhr eines ersten Teilstroms und einen zweiten Kanal für die Zufuhr eines zweiten Teilstroms auf. Beide Kanäle münden in flachen Eintrittsspalten in eine Misch- und Reaktionszone und verlassen diese über einen Auslasskanal. Zwischen der Misch- und Reaktionszone und mindestens einem Kanal für die Zufuhr eines Teilstroms ist eine Rückströmsperre angeordnet. Als Vorteil des erfindungsgemäßen Mikromischers erweist es sich, dass in der Misch- und Reaktionszone keine Rückströmungen auftreten. Dadurch werden die damit verbundenen Fällungsreaktionen in den Einlaufbereichen der Misch- und Reaktionszone vermieden. In der Misch- und Reaktionszone erfolgt die primäre Keimbildung für die später erfolgenden Ausfällungen und Kristallisationsprozesse. Zur Herstellung fein disperser Feststoffe, wie sie in Ausfällung oder Suspensionen auftreten, müssen hohe Keimbildungsraten erzielt werden. In großtechnischen Prozessen werden daher in entsprechenden Misch- und Reaktionszonen hohe Schergeschwindigkeiten durch schnelle Strömungen oder intensives Rühren realisiert. Hohe Keimbildungsraten mit Hilfe mikrostrukturierter Bauteile lassen sich erzielen, wenn feine Fluidstrahlen in ein strömendes Fluid injiziert werden. Die zugeführten Fluide können selbst bereits partikelhaltig sein.

Vorteilhafte Ausführungsformen des Mikromischers sind Gegenstand der Unteransprüche.

Ein gleichmäßiges Wachstum gebildeter Keime zu einheitlicher Partikelgröße setzt voraus, dass sich der Misch- und Reaktionszone ein gleichförmiges Strömungsfeld mit niedrigen Geschwindigkeiten anschließt. Dies wird mit Vorteil realisiert durch einen Auslasskanal mit einer glatten und sich aufweitenden Geometrie.

Die Rückströmsperre des Mikromischers ist vorzugsweise als Rückschlagventil oder als Membrananordnung ausgebildet. Die Vorspannung der Feder des Rückschlagventils kann mit Hilfe von mechanischen Mitteln eingestellt werden. Bei einer Einbindung des Rückschlagventils in einen externen Regelkreis erweist sich die Verwendung eines elektrischen, pneumatischen, hydraulischen oder elektromagnetischen Antriebs für das Rückschlagventil als vorteilhaft.

Wenn in den Mikromischer Substanzen eindringen, die spontan kristallisieren, ist es sinnvoll, die Rückströmsperren mit Reinigungsstiften zu versehen, die vorzugsweise eine nadelförmige Spitze aufweisen. Die Reinigungsstifte befreien die Mikrostrukturen bei jedem Öffnungs- und Schließvorgang von etwaigen Ablagerungen. Die Reinigungsstifte können entweder entgegen der Strömungsrichtung in eine betreffende Austrittsöffnung eingeführt werden oder in Strömungsrichtung. Werden etwaige Ablagerungen durch die Reinigungsstifte in Strömungsrichtung herausgedrückt, so erweist sich das als besonders vorteilhaft. Die Mikrostrukturen können auch durch kurzzeitiges Betätigen der Rückströmsperren im laufenden Betrieb mit Hilfe der Reinigungsstifte von Ablagerungen befreit werden. Der Betrieb muss dafür nicht unterbrochen werden. Das kurzzeitige Schließen zu Reinigungszwecken kann manuell, über gezielt aufgebrachte Druckschwankungen oder über einen externen Regelkreis ausgelöst werden.

Die Zuführung der Teilströme in einen kreis- oder ringförmigen Querschnitt kann unter hohem Druck und aus feinen Düsen erfolgen. Da Kristallisationsprozesse in verschiedenen Phasen ablaufen, die durch die Schergradienten beeinflusst werden, ist das Aufeinandertreffen der Teilströme unter verschiedenen Winkeln vorteilhaft, um unterschiedliche Geschwindigkeitsgradienten zwischen den Teilströmen zu realisieren. Die Teilströme treffen bevorzugt in einem Winkel zwischen 5 und 175° aufeinander. Treffen die Teilströme in spitzen Winkeln aufeinander, so weist eine Hauptkomponente ihrer Bewegung in Ausströmrichtung, so dass sich die Relativgeschwindigkeiten der einzelnen Teilströme langsam angleichen. Auf diese Weise können am Einspritzpunkt hohe Schergradienten realisiert werden, um die Keimbildung zu begünstigen. Die nachfolgende Abnahme der Relativgeschwindigkeiten wirkt sich günstig auf das Kristallwachstum aus. Bei einer Einspritzung eines Teilstroms im rechten Winkel können höhere Geschwindigkeitsgradienten in der Nähe der Dosierstelle realisiert werden, woraus eine hohe Keimbildungsrate resultiert. Anschließend kann ein erster Teilstrom durch einen zweiten Teilstrom in Ausströmrichtung bewegt werden, wobei sich die Relativgeschwindigkeit zwischen den Teilströmen verringert. Die Keimbildungsrate lässt sich weiter steigern, wenn die Einspritzung unter einem stumpfen Winkel erfolgt, beispielsweise 175°. In diesem Fall treten die größten Geschwindigkeitsgradienten an der Einspritzstelle auf.

Kristallisations- und Fällungsprodukte bedürfen in vielen Fällen einer weiteren Behandlung, um beispielsweise den pH-Wert im Produktstrom durch Nachdosierung einer Säure oder einer Lauge zu regeln oder mit Hilfe von Inhibitoren oder Stabilisatoren die Kristallgröße zu steuern. Oft sind dafür weitere Dosierstellen erforderlich. Diese können in einem oder in mehreren hintereinander geschalteten Apparaturen realisiert werden. In diesem Zusammenhang kann es auch notwendig sein, die zuströmenden Medien, ein gesamtes Bauteil, die Misch- und Reaktionszone oder weitere sich anschließende Bauteile gezielt zu temperieren.

Eine Beeinflussung der Partikelgröße der gebildeten Kristallisations- oder Fällungsprodukte kann erfolgen, indem der Querschnitt des Auslasskanals regelmäßig oder unregelmäßig gestaltet wird. Aufgrund ihrer gegenüber dem Medium unterschiedlichen Dichte bewegen sich die Fällungsprodukte meist mit geringerer Geschwindigkeit als die strömende Flüssigkeit. An einer Engstelle kommt es zu einer Beschleunigung der Strömung, an einer Erweiterung zu einer Beruhigung der Strömung. Auf diese Weise können gezielt Geschwindigkeitsgradienten aufgeprägt werden, die eine Zerschlagung großer Aggregate oder deren Vergrößerung bewirken.

Fällungs- und Kristallisationsprodukte neigen in Abhängigkeit von ihren Eigenschaften, der Wandrauhigkeit und den Strömungsbedingungen zur Ablagerung an den Wandungen des Mikromischers. Es erweist sich daher als günstig, die ausströmenden Produkte im Auslasskanal in einen Mantelstrahl einzuschließen, der zwischen der Wandung des Auslasskanals und dem ausströmenden Produkt als geschlossener Film zugeleitet wird.

Der erfindungsgemäße Mikromischer wird anhand der folgenden Figuren beispielhaft erläutert.

Es zeigen:

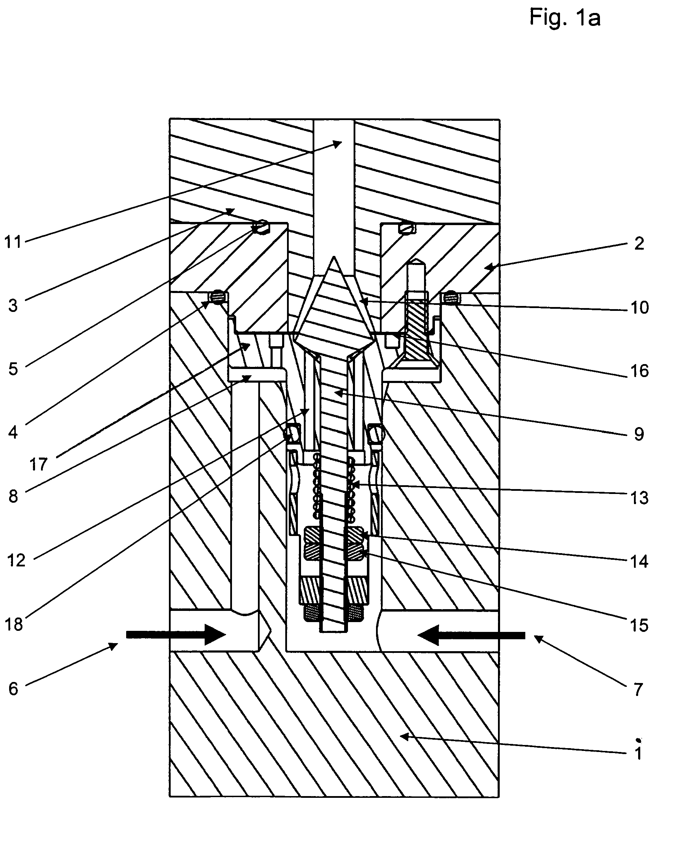

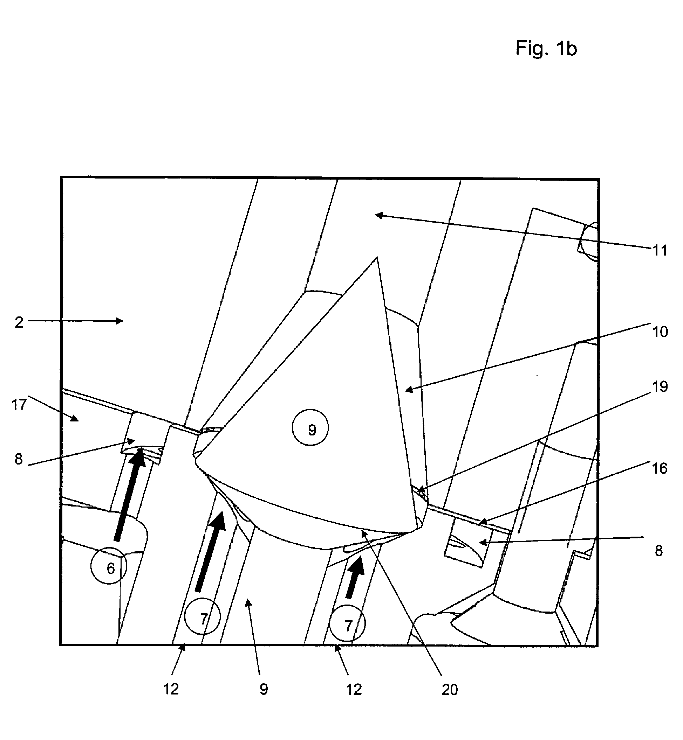

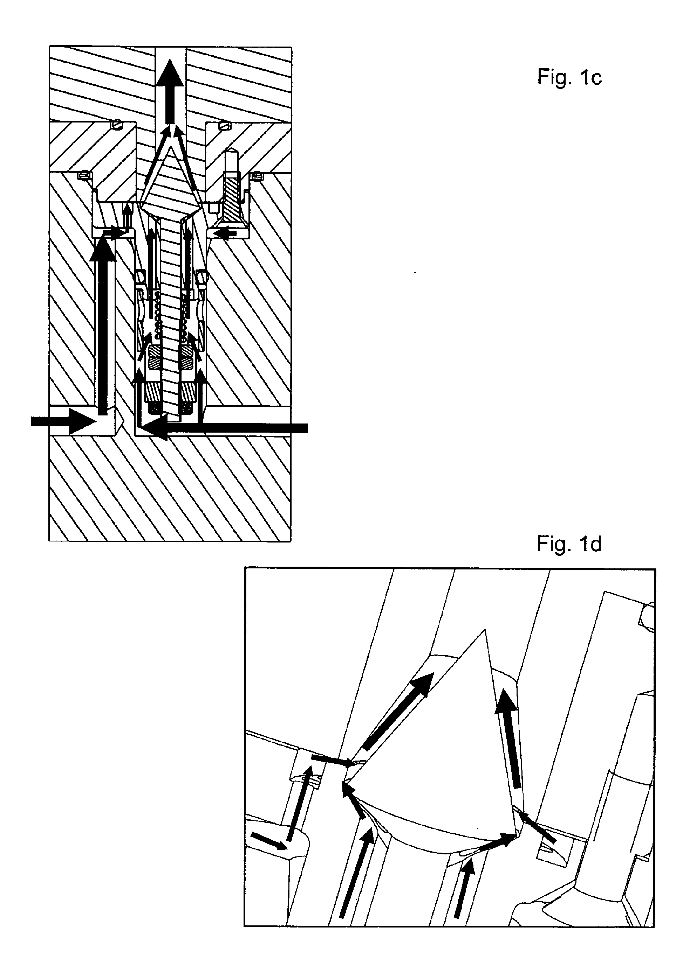

- Fig. 1 a: einen erfindungsgemäßen Mikromischer, insbesondere einen Ventilmischer, mit Rückschlagventil im Längsschnitt,
- Fig. 1 b: eine vergrößerte Ansicht des Mikromischers der Fig. 1 a auf die Umgebung der Misch- und Reaktionszone,
- Fig. 1 c: die Strömungsverläufe im Mikromischer aus Fig. 1 a,
- Fig. 1 d: die Strömungsverläufe in der vergrößerten Ansicht der Fig. 1 b,
- Fig. 2a: eine Abstandsscheibe zur Einstellung der Höhe des Eintrittsspalts für den ersten Teilstrom,
- Fig. 2b: eine Abstandsscheibe mit mikrostrukturierter Ausgestaltung,
- Fig. 3a: eine perspektivische Ansicht auf die Misch- und Reaktionszone des Mikromischers mit Rückschlagventil,
- Fig. 3b: einen Querschnitt durch die Misch- und Reaktionszone der Fig. 3a,
- Fig. 4: einen Längsschnitt durch einen Ventilstößel mit mikrostrukturierter Ausgestaltung der Oberfläche mit einer vergrößerten Ansicht in Wandnähe,
- Fig. 5a: einen Längsschnitt durch einen Ventilmischer mit schmalem ersten Eintrittsspalt und geschlossenem Rückschlagventil,
- Fig. 5b: einen Längsschnitt durch den Ventilmischer aus Fig. 5a mit geöffnetem Rückschlagventil,
- Fig. 5c: einen Längsschnitt durch einen Ventilmischer mit breitem ersten Eintrittsspalt und geschlossenem Rückschlagventil,
- Fig. 5d: einen Längsschnitt durch den Ventilmischer aus Fig. 5c mit geöffnetem Rückschlagventil,
- Fig. 6a: einen erfindungsgemäßen Mikromischer mit Membrananordnung im Längsschnitt,
- Fig. 6b: eine vergrößerte Ansicht des Mikromischers der Fig. 6a im Umgebungsbereich der Misch- und Reaktionszone,
- Fig. 6c: die Strömungsverläufe im Mikromischer der Fig. 6a,
- Fig. 6d: die Strömungsverläufe in der vergrößerten Ansicht der Fig. 6b,
- Fig. 7: einen erfindungsgemäßen Ventilmischer in Kombination mit einer weiteren Dosierstelle und einem beheizten Auslasskanal.

In der Fig. 1 a ist ein erfindungsgemäßer Ventilmischer im Längsschnitt dargestellt. Der Ventilmischer besteht aus einem Grundkörper 1, aus einem Mittelteil 2 und aus einem Deckel 3. Diese drei Bauelemente werden nach außen durch zwei O-Ringe 4, 5 abgedichtet. Dabei ist der erste O-Ring 4 zwischen dem Grundkörper 1 und dem Mittelteil 2 angeordnet, und der zweite O-Ring 5 befindet sich zwischen dem Mittelteil 2 und dem Deckel 3. Die beiden Teilströme 6, 7 treten von links und von rechts in den Grundkörper 1 ein. Sie sind jeweils durch horizontal verlaufende schwarze Pfeile angedeutet. Der erste Teilstrom 6 wird im linken Bereich des Grundkörpers 1 durch einen Bohrung nach oben geführt, die in einen Ringkanal 8 für den ersten Teilstrom 6 mündet. Aus dem Ringkanal 8 tritt der erste Teilstrom 6 knapp oberhalb eines Ventilstößels 9 in eine Mischund Reaktionszone 10. Der zweite Teilstrom 7 wird zentral durch den Mikromischer geführt. Er umströmt den Ventilstößel 9 und wird über mehrere Bohrungen 12 der Unterseite des Kopfes des Ventilstößels 9 zugeleitet und gelangt von dort in die Misch- und Reaktionszone 10. Das Reaktionsgemisch, bestehend aus dem ersten Teilstrom 6 und dem zweiten Teilstrom 7, wird über einen Auslasskanal 11 abgeleitet. Der Ventilstößel 9, die Misch- und Reaktionszone 10 und der Auslasskanal 11 sind rotationssymmetrisch ausgeführt. Durch die Einstellung einer Spiralfeder 13, einer Mutter 14 und einer Kontermutter 15 wird die Kraft festgelegt, die erforderlich ist, um den Ventilstößel 9 nach oben zu verschieben. Diese Kraft muss aufgebracht werden durch die Druckdifferenz, die zwischen dem Druck in den Bohrungen 12 für den zweiten Teilstrom 7 und der Misch- und Reaktionszone 10 besteht. Durch diese Druckdifferenz wird der Ventilstößel 9 nach oben verschoben und gibt den Weg für den zweiten Teilstrom 7 in die Misch- und Reaktionszone 10 frei. Kommt es zu einem Druckabfall in den Bohrungen 12 oder steigt durch Ablagerungen und Verstopfungen in der Misch- und Reaktionszone 10 oder im Auslasskanal 11 der Druck stark an, so wird der Ventilstößel 9 nach unten gegen den Ventilkörper 17 gedrückt, und eine Rückströmung aus der Misch- und Reaktionszone 10 in den Zulaufbereich für den zweiten Teilstrom 7 verhindert. Der Mikromischer ist also mit einer Rückströmsperre für den zweiten Teilstrom 7 in der Form eines Rückschlagventils ausgestattet. Die Dichtwirkung lässt sich weiterhin dadurch verbessern, dass zwischen dem Ventilstößel 9 und dem Ventilkörper 17 eine Elastomerdichtung eingesetzt wird, die hier nicht abgebildet ist. Der Ventilkörper 17 wird durch einen dritten O-Ring 18 gegen den Grundkörper 1 abgedichtet, so dass eine Vermischung der beiden Teilströme 6, 7 außerhalb der Misch- und Reaktionszone 10 ausgeschlossen ist. Zwischen dem Ventilkörper 17 und dem Mittelteil 2 des Mikromischers befindet sich eine flache Abstandsscheibe 16, die in verschiedenen Stärken, bevorzugt in einer Dicke zwischen 20 und 5.000 µm, ausgeführt ist. Durch eine Variation der Scheibendicke der Abstandsscheibe 16 ändert sich die Breite des Spalts zwischen dem Ventilkörper 17 und dem Mittelteil 2, aus dem der erste Teilstrom 6 in die Misch- und Reaktionszone 10 einströmt.

Die Fig. 1 b stellt eine vergrößerte Ansicht auf die Umgebung der Misch- und Reaktionszone 10 des Mikromischers der Fig. 1 a dar. Die Führung der beiden Teilströme 6, 7 ist hier besonders deutlich zu erkennen. Der erste Teilstrom 6 gelangt aus dem Ringkanal 8 über einen ersten Eintrittsspalt 19, dessen Breite durch die Abstandsscheibe 16 bestimmt wird, in die Misch- und Reaktionszone 10. Durch die gleichförmige Dicke des ersten Eintrittsspalts 19 strömt der erste Teilstrom 6 als geschlossener Film aus dem Ventilkörper 17 aus. Dahinter trifft der erste Teilstrom 6 auf den ebenfalls als geschlossener und gleichförmiger Film austretenden zweiten Teilstrom 7. Der zweite Teilstrom 7 tritt aus einem zweiten Eintrittsspalt 20 zwischen dem Ventilstößel 9 und dem Ventilkörper 17 aus. In der Folge strömen die beiden als Filme ausgebildeten Teilströme 6, 7 parallel zueinander durch die Misch- und Reaktionszone 10 zum Auslasskanal 11. Eine Verbesserung der Mischgüte wird erreicht, wenn die Abstandsscheibe 16 mikrostrukturiert ist.

Die Fig. 1 c und 1 d geben jeweils die Strömungsverläufe der Fig. 1 a und 1b wieder. Auf Bezugszeichen wurde verzichtet. Die Strömungsverläufe sind jeweils durch die schwarzen Pfeile dargestellt.

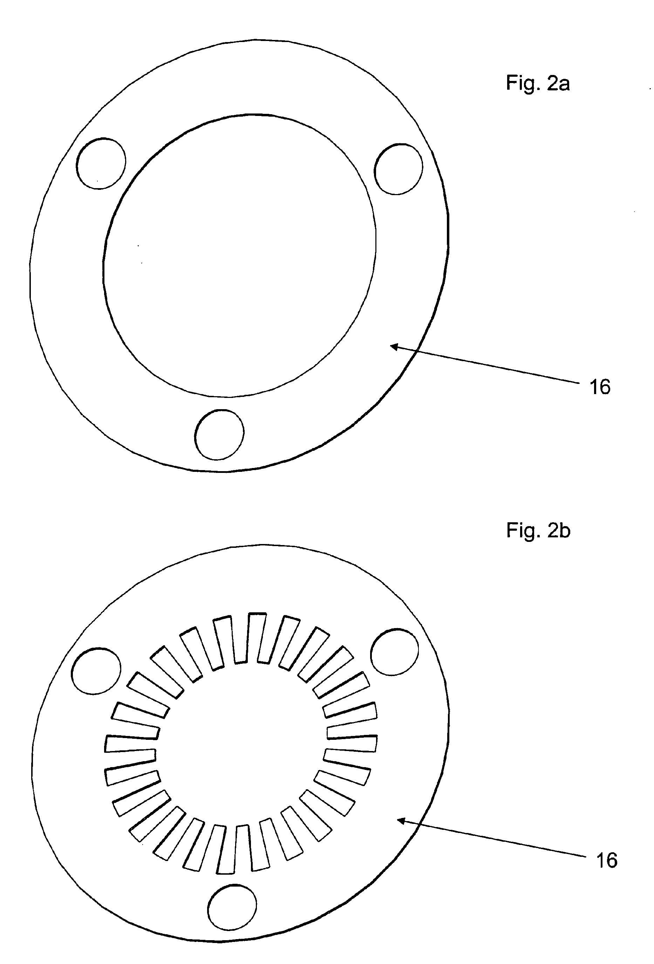

In den Fig. 2a und 2b sind jeweils Abstandsscheiben 16 dargestellt, wie sie zur Einstellung der Höhe des ersten Eintrittsspalts 19 zwischen dem Ventilkörper 17 und dem Mittelteil 2 für den ersten Teilstrom 6 verwendet werden. Die Abstandsscheibe 16 der Fig. 2b unterscheidet sich von der in der Fig. 2a dadurch, dass sie zusätzlich eine mikrostrukturierte Ausgestaltung im Bereich des ersten Eintrittsspalts 19 für den ersten Teilstrom 6 aufweist. Durch die Abstandsscheibe 16 in der Fig. 2b kann eine Verbesserung der Vermischung der beiden Teilströme 6, 7 erzielt werden, da der geschlossene Film des ersten Teilstroms 6 in mehrere Einzelstrahlen zerlegt wird und die Geschwindigkeit dieser Einzelstrahlen am ersten Eintrittsspalt 19 deutlich erhöht wird, so dass die Strahlen in den zweiten Teilstrom 7 eindringen und von diesem umschlossen werden. Auf diese Weise werden die Vorteile der Mikrotechnik für die Erzeugung kleiner Fluidlamellen ausgenutzt, ohne dass es zu Ablagerungen und Verstopfungen der Mikrostrukturen kommt.

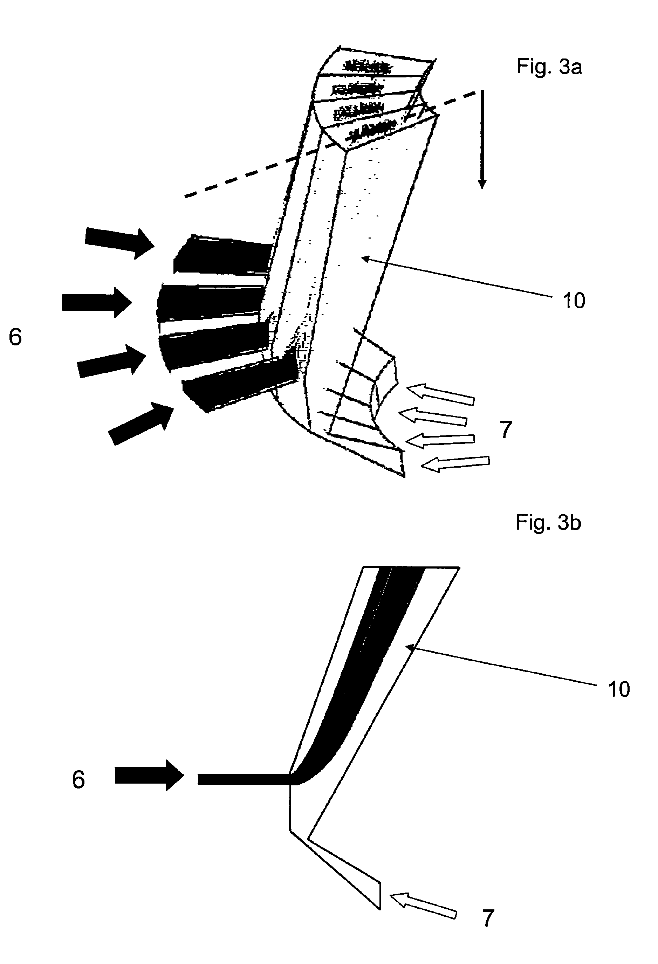

Die Fig. 3a und 3b stellen Strömungsverläufe in der Misch- und Reaktionszone 10 dar. Dabei ist die Fig. 3a eine perspektivische Ansicht auf die Misch- und Reaktionszone 10, wobei eine Abstandsscheibe 16 gemäß der Fig. 2b verwendet wurde. Der erste Teilstrom 6 ist durch die schwarzen Pfeile 6 angedeutet, und der zweite Teilstrom 7 ist durch weiße Pfeile dargestellt. Es ist zu erkennen, dass der erste Teilstrom 6 in mehrere Einzelstrahlen zerlegt worden ist, die vom zweiten Teilstrom 7 jeweils umschlossen werden. In der Fig. 3b ist ein Querschnitt durch die Misch- und Reaktionszone 10 der Fig. 3a mit dem entsprechenden Strömungsverlauf des ersten Teilstroms 6 und des zweiten Teilstroms 7 wiedergegeben.

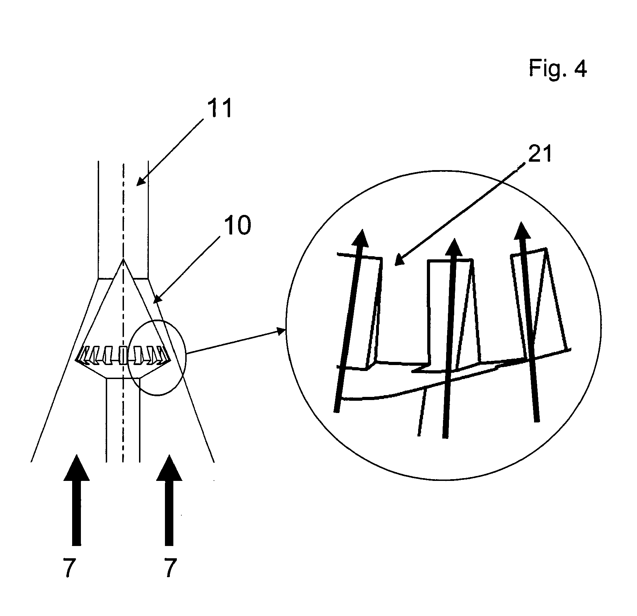

Die Fig. 4 stellt einen Ventilstößel 9 mit einer strukturierten Mikrooberfläche 21 dar. Die strukturierte Mikrooberfläche 21 ist eingekreist und rechts in einem Kreis vergrößert wiedergegeben. Durch die strukturierte Mikrooberfläche 21 wird der ansonsten als geschlossener Fluidfilm zwischen dem Ventilstößel 9 und dem Ventilkörper 17 aus dem zweiten Eintrittsspalt 20 austretende zweite Teilstrom 7 in mehrere Einzelstrahlen aufgeteilt. Die Strukturen der strukturierten Mikrooberfläche 21 sind vorzugsweise zwischen 50 und 3.000 µm hoch, und sie werden so in der Misch- und Reaktionszone 10 angeordnet, dass die Stege bei geschlossenem Ventilstößel 9 an die Wand anschließen, so dass der zweite Teilstrom 7 tatsächlich in separate Einzelstrahlen aufgeteilt wird. Auf diese Weise wird über den Strömungsquerschnitt des zweiten Teilstroms 7 gemessen ein Feld mit sehr hohen Geschwindigkeitsgradienten erzeugt. Dies begünstigt die Vermischung des ersten Teilstroms 6 mit dem zweiten Teilstrom 7.

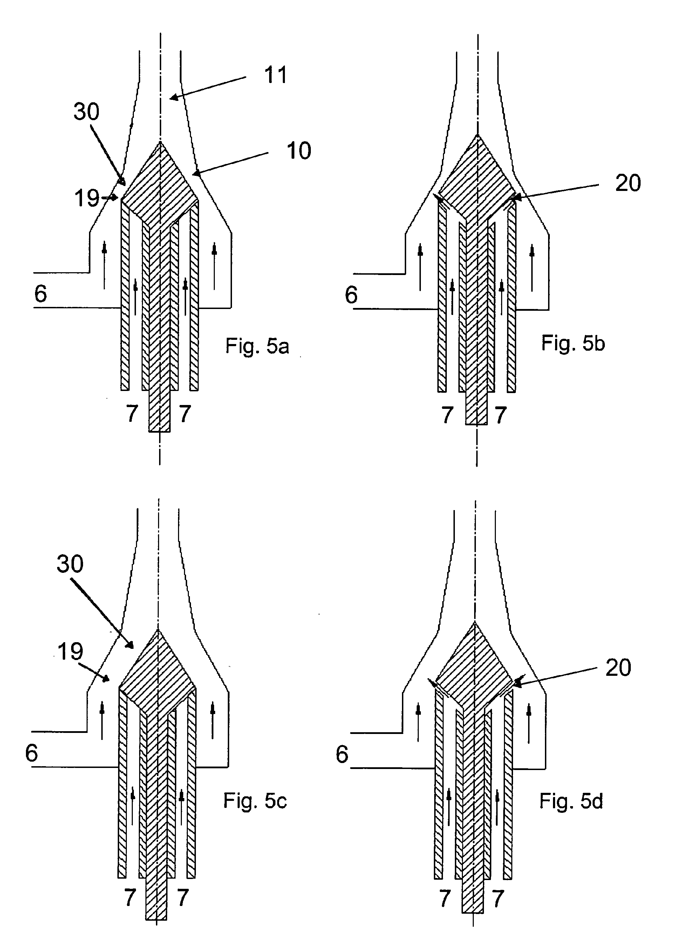

Die Fig. 5a bis 5d stellen jeweils einen Längsschnitt durch einen Mikromischer mit einem Rückschlagventil als Rückströmsperre dar. Die Fig. 5a und 5b zeigen einen Mikromischer mit schmalem ersten Eintrittsspalt 19. In der Fig. 5a ist das Rückschlagventil geschlossen, und in der Fig. 5b ist das Rückschlagventil geöffnet und gibt einen zweiten Eintrittsspalt 20 für den zweiten Teilstrom 7 frei. Die Fig. 5c und 5d stellen einen Mikromischer mit breitem ersten Eintrittsspalt 19 dar. In der Fig. 5c ist das Rückschlagventil geschlossen, und in der Fig. 5d ist das Rückschlagventil geöffnet und gibt einen zweiten Eintrittsspalt 20 für den zweiten Teilstrom 7 frei. Durch den schmalen ersten Eintrittsspalt 19 in der Fig. 5b erfährt der erste Teilstrom 6 eine wesentlich höhere Geschwindigkeit als im Fall der Fig. 5d mit breitem ersten Eintrittsspalt 19. Über ein Gewinde oder eine vergleichbare externe Einrichtung lässt sich die Breite des ersten Eintrittsspalts 19 und somit auch die Breite des Spalts 30, in dem die beiden Teilströme 6, 7 zusammenlaufen, variieren.

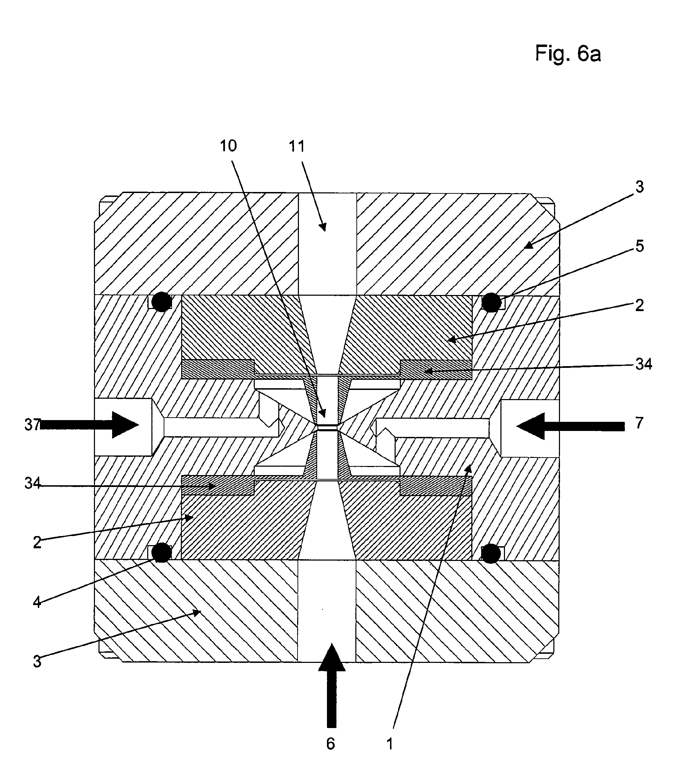

In der Fig. 6a ist ein erfindungsgemäßer Mikromischer mit einem Membrankörper 34 als Rückströmsperre im Längsschnitt zu sehen. In diesem Mikromischer werden drei Teilströme 6, 7, 37 miteinander vermischt. Auch dieser Mikromischer umfasst einen Grundkörper 1, ein Mittelteil 2 und einen Deckel 3. Der Deckel 3 besteht aus einer oberen und einer unteren Hälfte, und das Mittelteil 2 besteht ebenso aus einem oberen und einem unteren Teil. Der zweite und der dritte Teilstrom 7, 37 werden jeweils über eine Rückströmsperre in der Art eines Membrankörpers 34 zu der Misch- und Reaktionszone 10 geleitet. Für den Membrankörper 34 kommen verschiedene Materialien in Frage. Dabei kann über verschiedene Wanddicken des Membrankörpers 34 und unterschiedliche Elastizität des Materials die durch den Differenzdruck aufzubringende erforderliche Öffnungskraft eingestellt werden. Dies ist vergleichbar mit der Einstellung in dem Mikromischer der Fig. 1 a mit Rückschlagventil, die über die Spiralfeder 13, die Mutter 14 und die Kontermutter 15 erfolgt. In dieser Ausführungsform des Mikromischers mit Membrankörper 34 können dem ersten Teilstrom 6 entweder nur ein weiterer Teilstrom, oder aber zwei weitere Teilströme 7, 37 zugemischt werden. Ebenso ist denkbar, dass der erste Teilstrom 6 Partikel mit sich führt. Die Partikel können die Mikrostruktur ungehindert durchdringen, da der Mikromischer Mindestabmessungen im Bereich zwischen 500 und 3.000 µm aufweist.

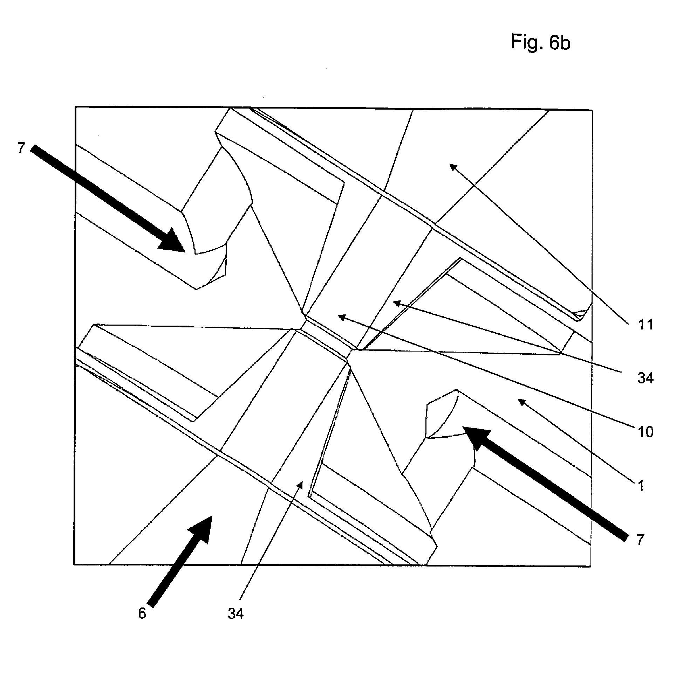

In der Fig. 6b ist eine vergrößerte Ansicht der Fig. 6a im Umgebungsbereich der Misch- und Reaktionszone 10 dargestellt.

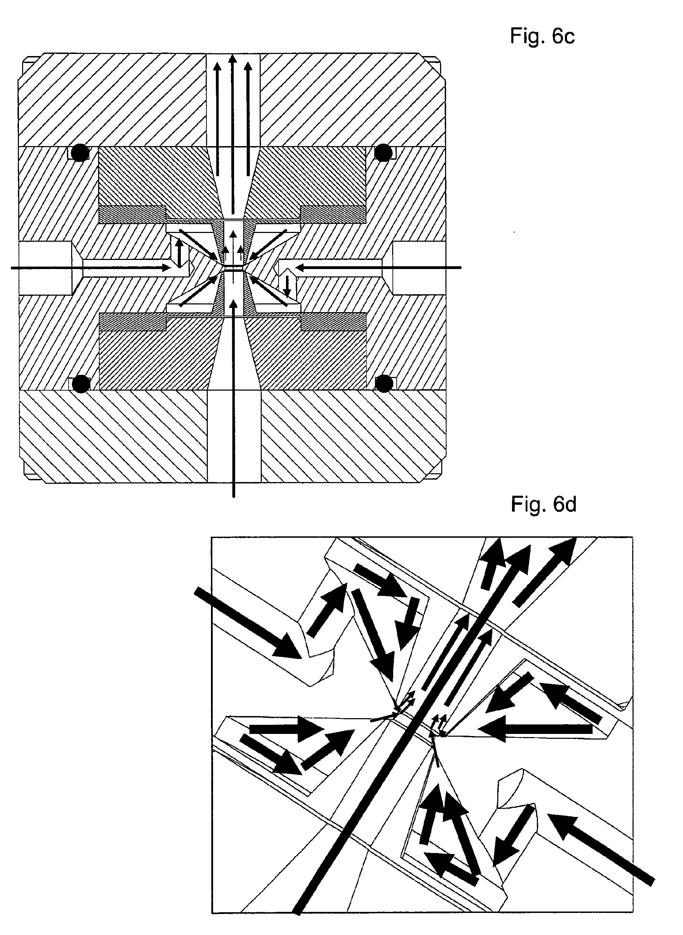

Die Fig. 6c und 6d geben die Strömungsverläufe der Fig. 6a und 6b wieder. Auf Bezugszeichen wurde verzichtet.

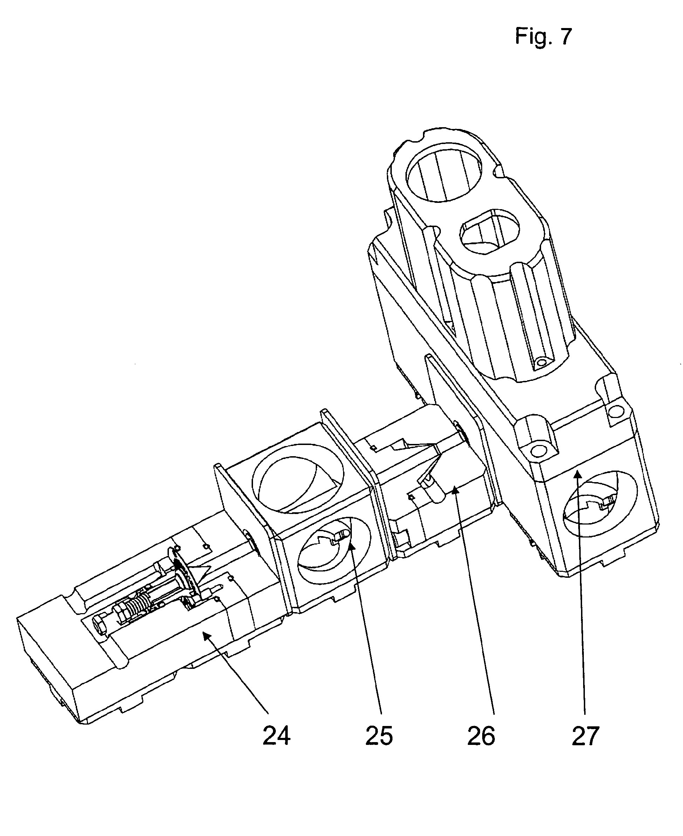

In der Fig. 7 ist ein als Ventilmischer ausgebildetes Modul 24 dargestellt, das zusammen mit einer weiteren Dosierstelle 26 und einem elektrischen Heizmodul 27 zu einem integrierten Bauteil kombiniert ist. Zwischen dem als Ventilmischer ausgebildeten Modul 24 und der weiteren Dosierstelle 26 ist ein Isolationsmodul 25 zur thermischen Entkopplung dieser benachbarten Bauteile vorgesehen.

### Bezugszeichenliste:

- 1: Grundkörper
- 2: Mittelteil
- 3: Deckel
- 4: erster O-Ring
- 5: zweiter O-Ring
- 6: erster Teilstrom
- 7: zweiter Teilstrom
- 8: Ringkanal für den ersten Teilstrom
- 9: Ventilstößel
- 10: Misch- und Reaktionszone
- 11: Auslasskanal
- 12: Bohrungen im Ventilkörper für den zweiten Teilstrom
- 13: Spiralfeder
- 14: Mutter
- 15: Kontermutter
- 16: Abstandsscheibe
- 17: Ventilkörper
- 18: dritter O-Ring
- 19: Eintrittsspalt für den ersten Teilstrom
- 20: Eintrittsspalt für den zweiten Teilstrom
- 21: mikrostrukturierte Oberfläche des Ventilstößels
- 24: als Ventilmischer ausgebildetes Modul
- 25: Isolationsmodul zur thermischen Entkopplung benachbarter Bauteile
- 26: weitere Dosierstelle
- 27: elektrisches Heizmodul
- 30: Abstand
- 34: Membrankörper
- 37: dritter Teilstrom

## Patentansprüche

1. Mikromischer zum Vermischen von mindestens zwei unter Bildung von Ausfällungen oder Suspensionen reagierenden Fluiden mit einem ersten Kanal für die Zufuhr eines ersten Teilstroms (6) und mit einem zweiten Kanal für die Zufuhr eines zweiten Teilstroms (7), die in flachen Eintrittsspalten (19, 20) in eine Misch- und Reaktionszone (10) münden und die Misch- und Reaktionszone (10) über einen Auslasskanal (11) verlassen, **dadurch gekennzeichnet, dass** zwischen der Misch- und Reaktionszone (10) und mindestens einem Kanal für die Zufuhr eines Teilstroms (6, 7, 37) eine Rückströmsperre angeordnet ist.

2. Mikromischer nach Anspruch 1, **dadurch gekennzeichnet, dass** die Rückströmsperre als Rückschlagventil ausgebildet ist.

3. Mikromischer nach Anspruch 2, **dadurch gekennzeichnet, dass** die Vorspannung des Rückschlagventils mit mechanischen Mitteln (13, 14, 15) vorgegeben wird.

4. Mikromischer nach Anspruch 2, **dadurch gekennzeichnet, dass** das Rückschlagventil elektrisch, pneumatisch, hydraulisch oder elektromagnetisch ansteuerbar ist.

5. Mikromischer nach Anspruch 1, **dadurch gekennzeichnet, dass** die Rückströmsperre als Membrananordnung ausgebildet ist.

6. Mikromischer nach einem der vorhergehenden Ansprüche, **dadurch gekennzeichnet, dass** die Rückströmsperre durch Reinigungsstifte, die bei jedem Öffnungs- und Schließvorgang in die von der Rückströmsperre freigegebenen Öffnung einfahren und im Wesentlichen nadelförmig ausgebildet sind, von Ablagerungen im laufenden Betrieb gereinigt wird.

7. Mikromischer nach einem der vorhergehenden Ansprüche, **dadurch gekennzeichnet, dass** Eintrittsspalten (19, 20) für die Teilströme (6, 7, 37) als schmale Ringspalten ausgebildet sind, so dass die Teilströme (6, 7, 37) als dünne Filmschichten aufeinander treffen.

8. Mikromischer nach Anspruch 7, **dadurch gekennzeichnet, dass** die Eintrittsspalten (19, 20) durch mikrostrukturierte Bauelemente (16, 9) begrenzt werden, die eine Aufteilung der Teilströme (6, 7, 37) in einzelne Teilstrahlen herbeiführen.

9. Mikromischer nach einem der vorhergehenden Ansprüche, **dadurch gekennzeichnet, dass** der Auslasskanal (11) eine glatte und sich aufweitende Geometrie aufweist.

10. Mikromischer nach einem der vorhergehenden Ansprüche, **dadurch gekennzeichnet, dass** im Auslasskanal (11) eine Zuführung für einen Mantelstrahl vorgesehen ist, der die vermischten Teilströme (6, 7, 37) beim Auslassen umhüllt.
